# EUROPEAN PATENT APPLICATION

(11) **EP 4 810 850 A1**
(43) Date of publication of application: **23.09.2026**
(21) Application number: 24891130.7
(22) Date of filing: 11.10.2024
(51) Int. Cl.: F17C 1/06, F16J 12/00

(54) **PRESSURE VESSEL AND METHOD FOR MANUFACTURING PRESSURE VESSEL**

(30) Priority: 15.11.2023 JP 2023194135
(71) Applicant: Yachiyo Industry Co., Ltd., Sayama-shi, Saitama 350-1335 (JP)
(72) Inventor: KAMIYA Ken, Sayama-Shi, Saitama 350-1328 (JP)
(74) Representative: Weickmann & Weickmann PartmbB
(86) International application number: PCT/JP2024/036432
(87) International publication number: WO 2025/105088

(57) **Abstract**

The present invention is characterized by comprising: a liner (2) that is provided with a cylindrical trunk section (21), a head section (23) in which a mouthpiece (3) is disposed, and a shoulder section (22) that is provided between the trunk section (21) and the head section (23) and decreases in diameter toward the head section (23); and a reinforcing layer (4) that is formed on the outer peripheral surface of the liner (2) by winding fibers impregnated with a resin, wherein a groove section (25) is formed in at least one among a first boundary section (24) serving as a boundary between the head section (23) and the shoulder section (22) and a second boundary section (26) serving as a boundary between the trunk section (21) and the shoulder section (22), and resin that has seeped out from the reinforcing layer (4) has entered the groove section (25).

## Description

### TECHNICAL FIELD

The present invention relates to a pressure vessel and a method for manufacturing a pressure vessel.

### BACKGROUND ART

A pressure vessel is known which includes a hollow liner and a reinforcing layer formed by winding fibers impregnated with a resin around the outer peripheral surface of the liner (Patent Literature 1). The liner includes a cylindrical body portion, a head portion in which a fitting is arranged, and a shoulder portion which is provided between the body portion and the head portion and reduces in diameter toward the head portion. The reinforcing layer is formed by filament winding in which a fiber reinforced resin including a bundle of fibers impregnated with a resin is wound around the outer peripheral surface of the liner.

### CITATION LIST

### Patent Literature

[Patent Literature 1] Japanese 2012-246962 A

### SUMMARY OF INVENTION

### Technical Problem

Since the shoulder portion of the liner is formed to reduce in diameter toward the head portion, there is a problem that the fiber reinforced resin is displaced. In particular, the displacement is likely to occur from a boundary portion between the body portion and the shoulder portion to the head portion.

The present invention has been made from such a viewpoint, and an object thereof is to provide a pressure vessel and a method for manufacturing a pressure vessel which can prevent the fiber reinforced resin from being displaced from a predetermined position.

### Solution to Problem

The present invention provides a pressure vessel including: a liner including a cylindrical body portion, a head portion in which a fitting is arranged, and a shoulder portion provided between the body portion and the head portion and reducing in diameter toward the head portion; and a reinforcing layer formed by winding fibers impregnated with a resin around the outer peripheral surface of the liner. A groove is formed in at least one of a first boundary portion which is a boundary between the head portion and the shoulder portion and a second boundary portion which is a boundary between the body portion and the shoulder portion, and the resin seeping out from the reinforcing layer enters the groove.

Furthermore, the present invention provides a method for manufacturing a pressure vessel, including: a liner forming step of forming a liner including a cylindrical body portion, a head portion in which a fitting is arranged, and a shoulder portion provided between the body portion and the head portion and reducing in diameter toward the head portion; a groove forming step of forming a groove in at least one of a first boundary portion which is a boundary between the head portion and the shoulder portion and a second boundary portion which is a boundary between the body portion and the shoulder portion; a reinforcing layer forming step of forming a reinforcing layer by winding fibers impregnated with a resin around the outer peripheral surface of the liner; and a resin impregnating step of causing the impregnated resin to enter the groove.

According to the present invention, since the resin seeping out from the reinforcing layer enters the groove and cures, the reinforcing layer can be fixed to the liner. Therefore, displacement of the fiber reinforced resin can be prevented with a simple configuration.

In addition, it is preferable that a thick portion or a projection having a thickness larger than other portions is formed in the first boundary portion, and the groove is formed in the thick portion or the projection.

According to the present invention, it is possible to prevent displacement of the fiber reinforced resin and to prevent a decrease in the strength of the pressure vessel. **Advantageous Effects of Invention**

According to the pressure vessel and the method for manufacturing a pressure vessel according to the present invention, it is possible to provide a pressure vessel and a method for manufacturing a pressure vessel which can prevent the fiber reinforced resin from being displaced from a predetermined position.

### BRIEF DESCRIPTION OF DRAWINGS

[FIG. 1]

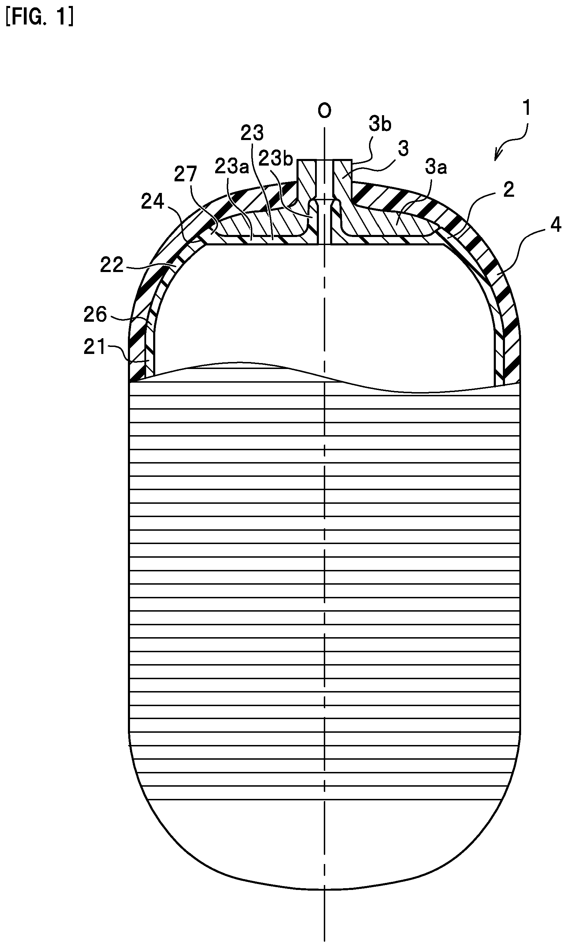

   FIG. 1 is a side cross-sectional view showing a pressure vessel according to a first embodiment of the present invention.
[FIG. 2]

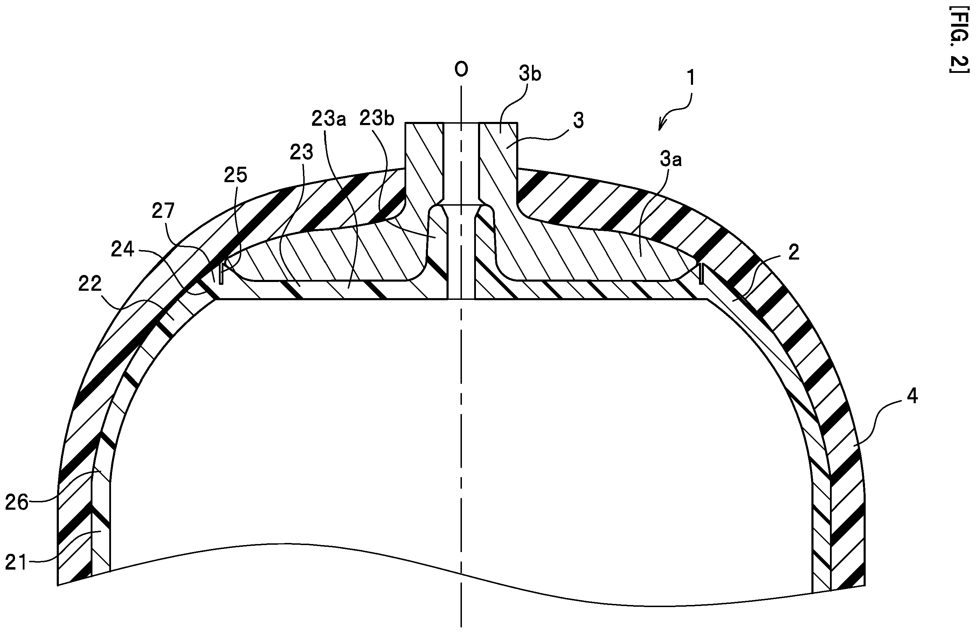

   FIG. 2 is an enlarged side cross-sectional view showing the vicinity of a fitting of the first embodiment.
[FIG. 3]

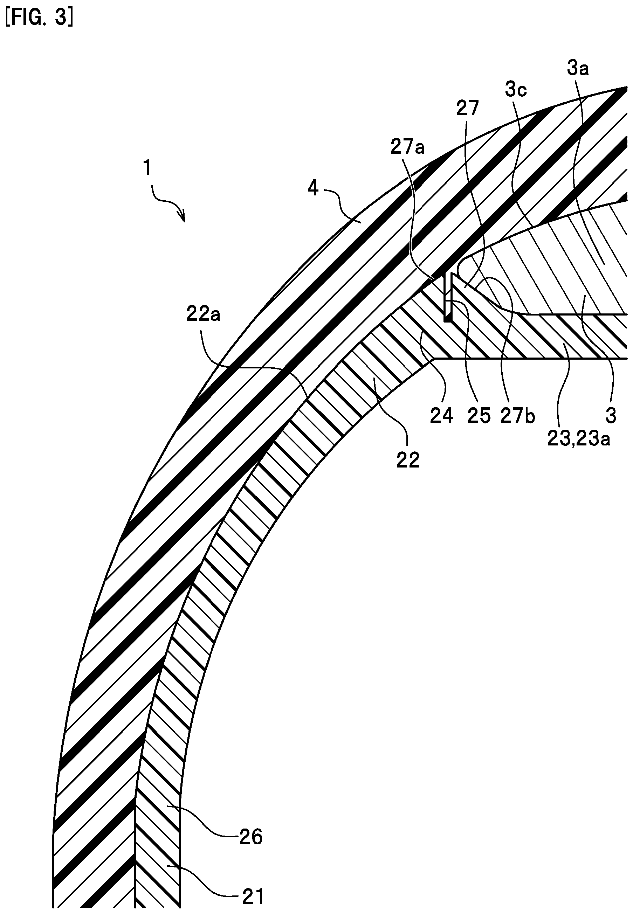

   FIG. 3 is an enlarged side cross-sectional view showing the vicinity of a groove of the first embodiment.
[FIG. 4]

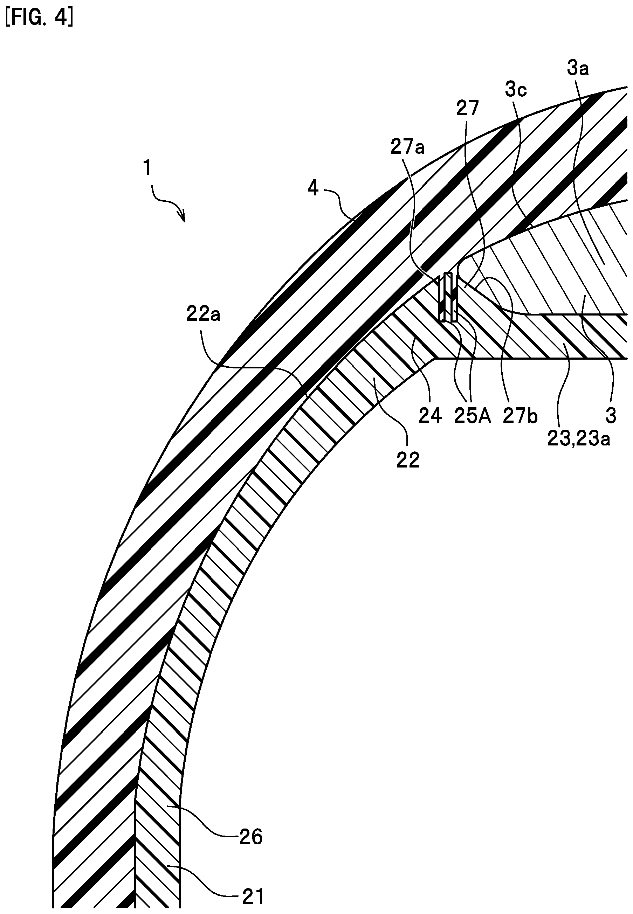

   FIG. 4 is an enlarged side cross-sectional view showing a first modification of the groove of the first embodiment.
[FIG. 5]

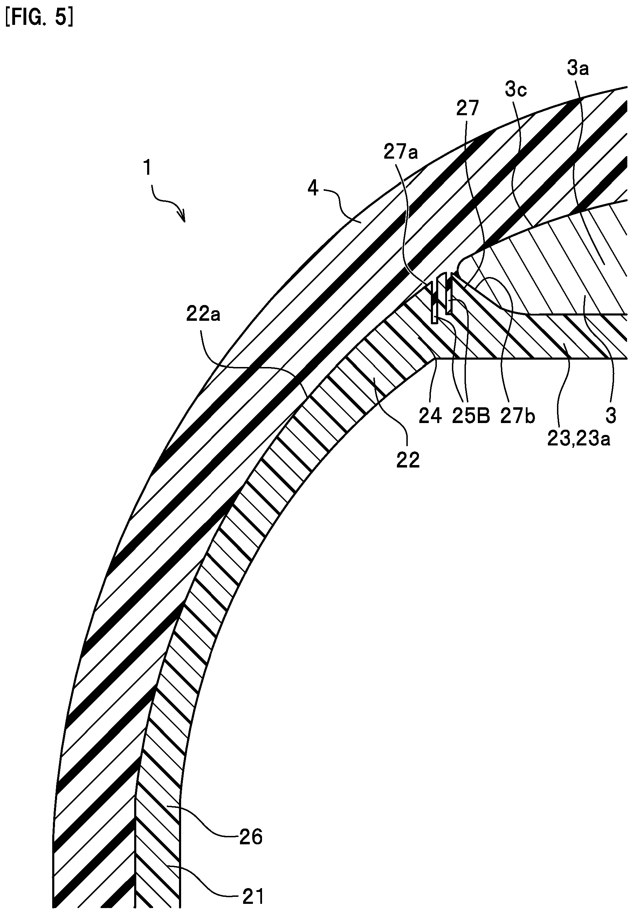

   FIG. 5 is an enlarged side cross-sectional view showing a second modification of the groove of the first embodiment.
[FIG. 6]

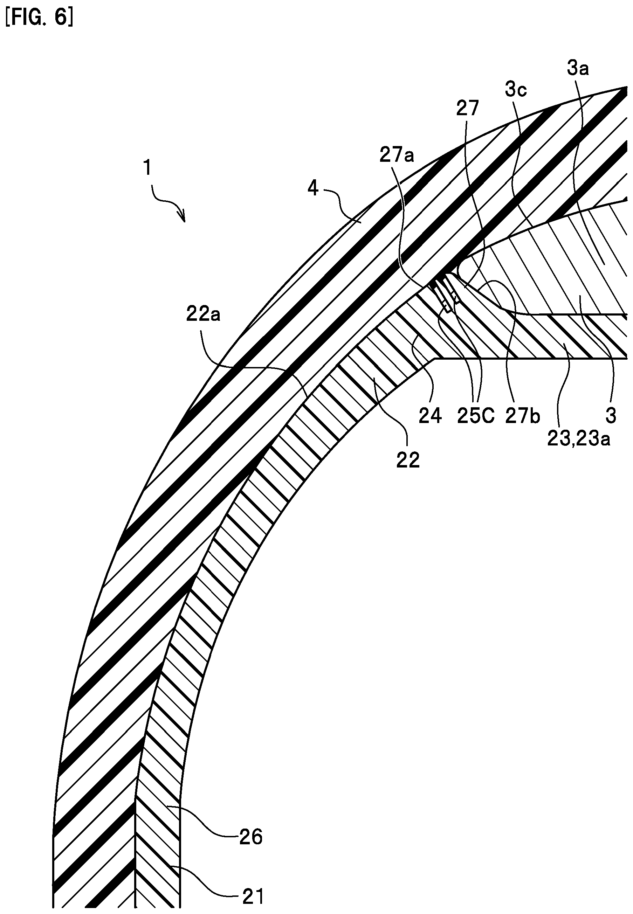

   FIG. 6 is an enlarged side cross-sectional view showing a third modification of the groove of the first embodiment.
[FIG. 7]

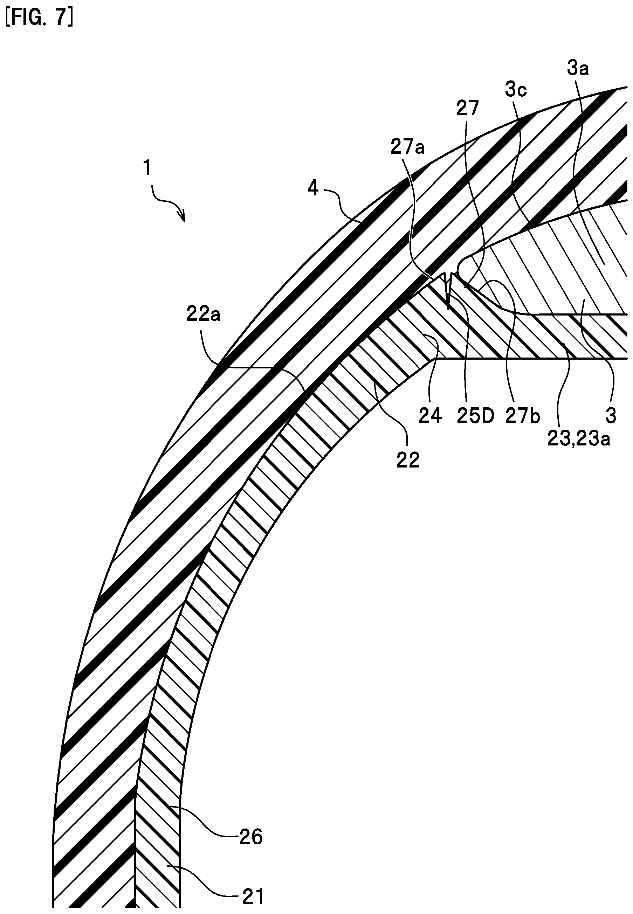

   FIG. 7 is an enlarged side cross-sectional view showing a fourth modification of the groove of the first embodiment.
[FIG. 8]

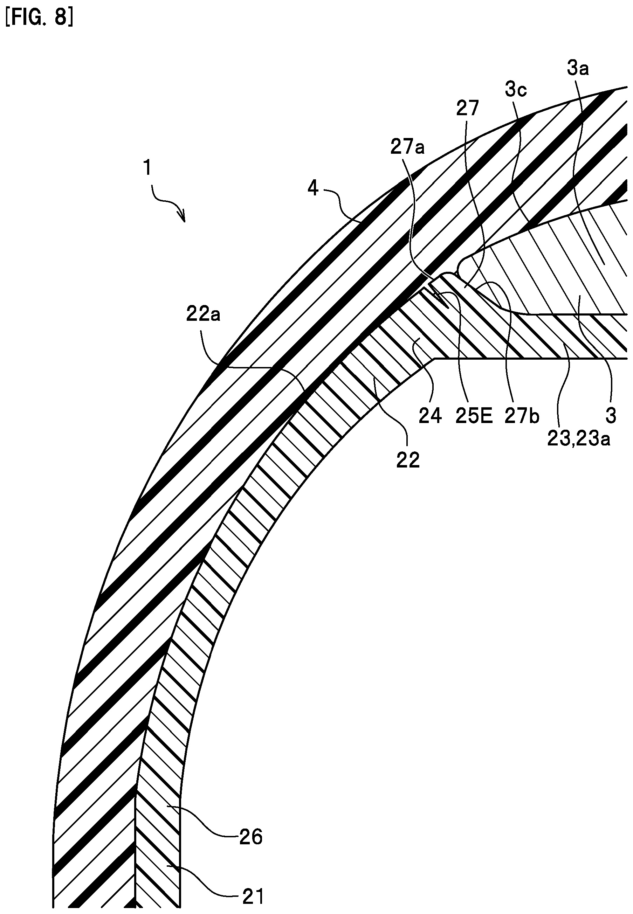

   FIG. 8 is an enlarged side cross-sectional view showing a fifth modification of the groove of the first embodiment.
[FIG. 9]

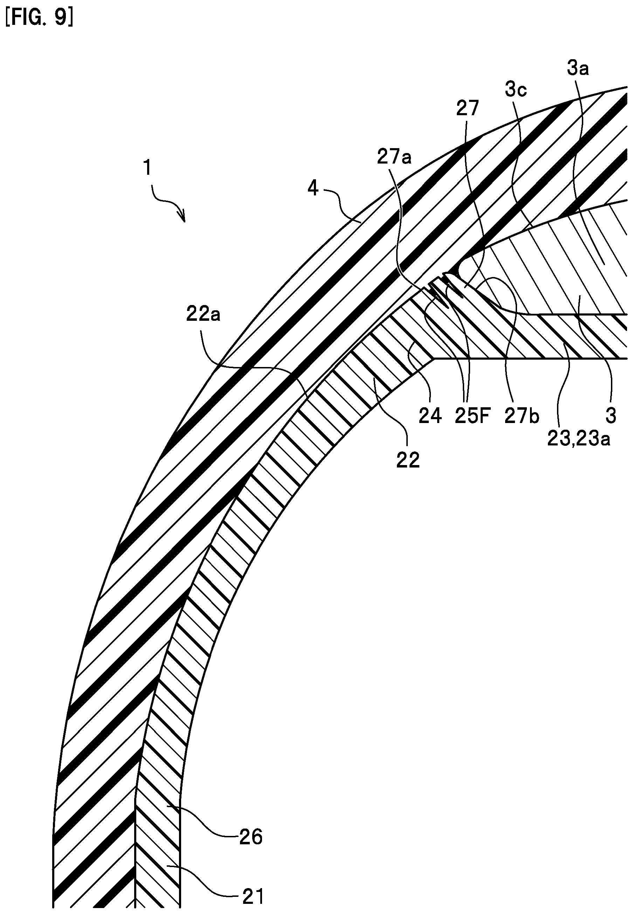

   FIG. 9 is an enlarged side cross-sectional view showing a sixth modification of the groove of the first embodiment.
[FIG. 10]

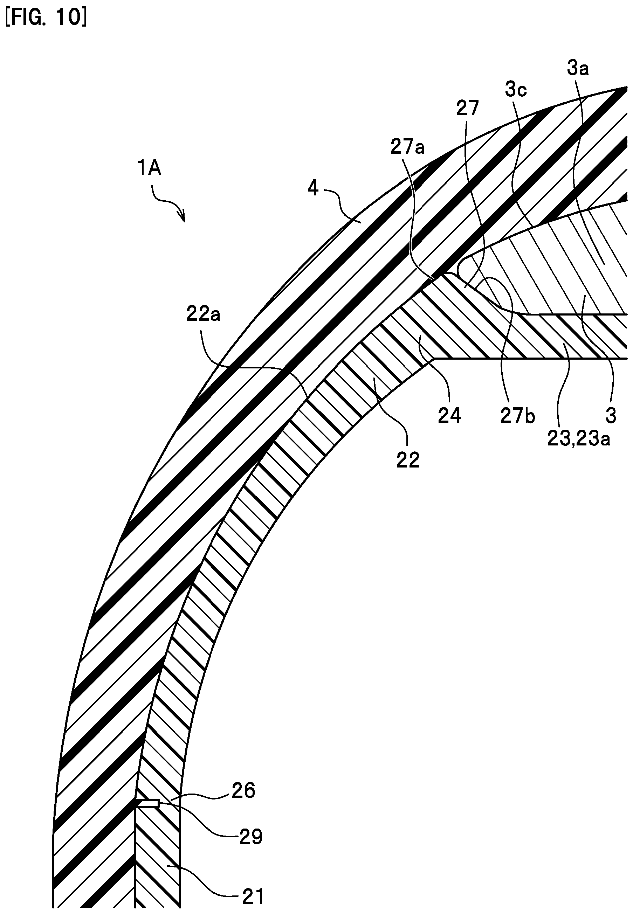

   FIG. 10 is an enlarged side cross-sectional view showing a pressure vessel according to a second embodiment of the present invention.
[FIG. 11]

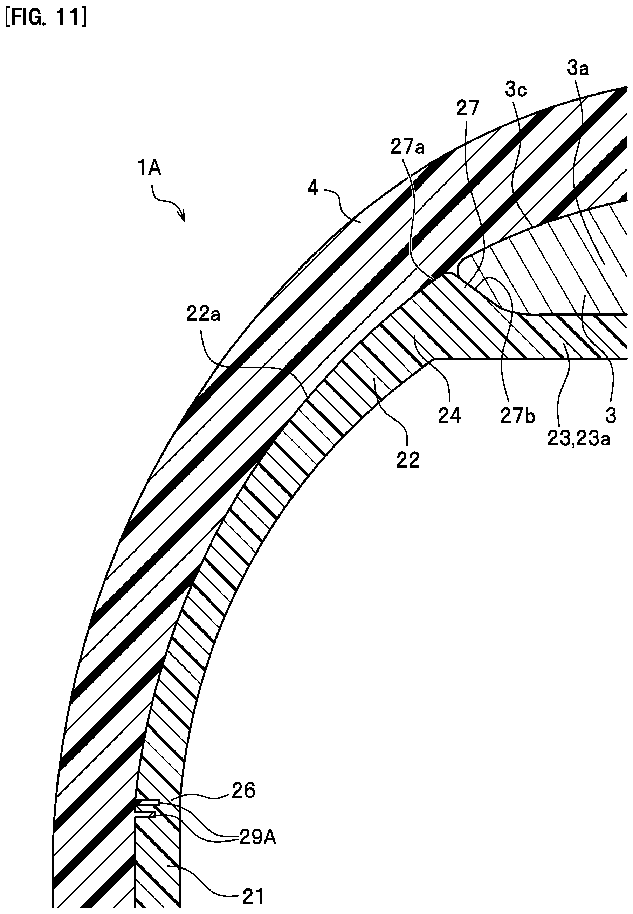

   FIG. 11 is an enlarged side cross-sectional view showing a first modification of the groove of the second embodiment.
[FIG. 12]

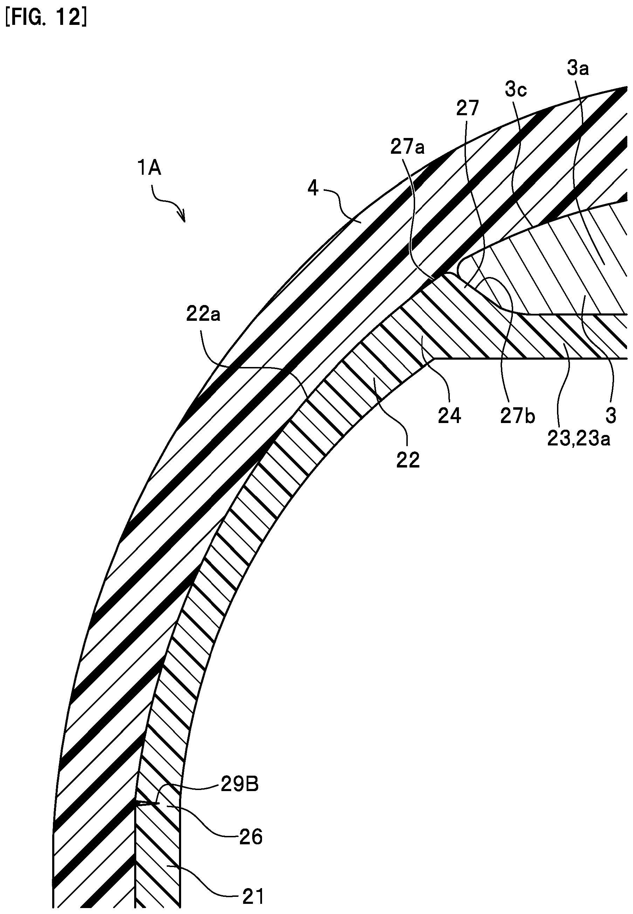

   FIG. 12 is an enlarged side cross-sectional view showing a second modification of the groove of the second embodiment.
[FIG. 13]

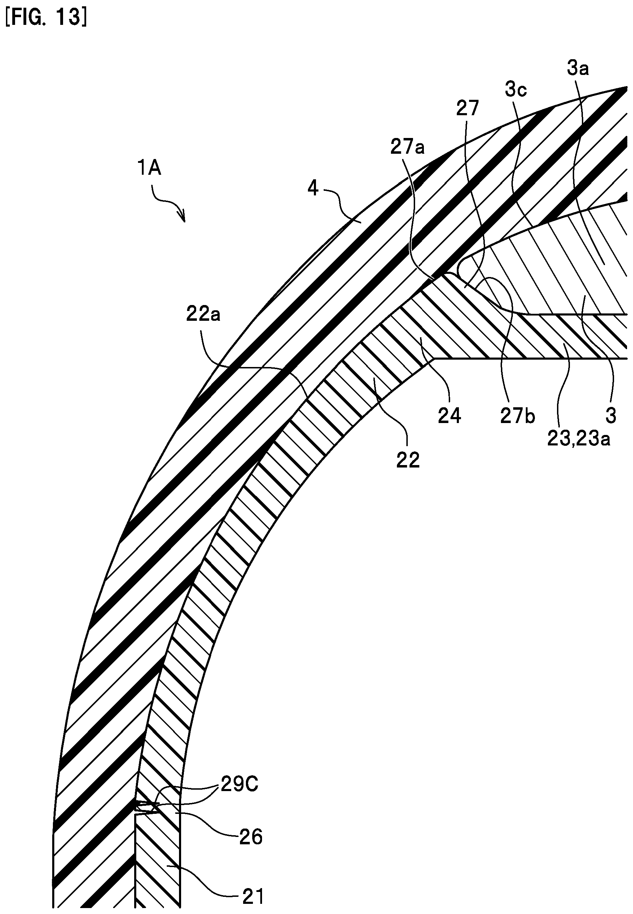

   FIG. 13 is an enlarged side cross-sectional view showing a third modification of the groove of the second embodiment.

### DESCRIPTION OF EMBODIMENTS

### <<Pressure Vessel According to First Embodiment>>

Embodiments of the present invention will be described below with reference to the accompanying drawings. In the description of the drawings, the same elements are denoted by the same reference numerals, and redundant descriptions will be omitted as appropriate. The embodiments and modifications can be combined as appropriate.

As shown in FIG. 1, a pressure vessel 1 according to the present embodiment is applied as a vessel for storing a low-pressure gas such as LPG, a high-pressure gas such as hydrogen gas, or other fluids. The pressure vessel 1 includes a liner 2, a fitting 3, and a reinforcing layer 4.

The liner 2 is made of a resin material such as high-density polyethylene (HDPE), polyamide, polyketone, or polyphenylene sulfide (PPS). The liner 2 is formed by injection molding, blow molding, or the like. The liner 2 may be integrally formed or may be formed by joining separately formed pieces.

As shown in FIG. 2 and FIG. 3, the liner 2 includes a body portion 21, a shoulder portion 22, and a head portion 23. The liner 2 is formed to have substantially the same thickness except for the projection 27 described later. The body portion 21 has a hollow cylindrical shape. The shoulder portion 22 is a portion formed continuously from an end of the body portion 21 and gradually reducing in diameter toward the head portion 23. The shoulder portion 22 has a hemispherical dome shape. The head portion 23 is a portion formed continuously from an end of the shoulder portion 22 and in which the fitting 3 is arranged. The head portion 23 includes a base portion 23a and a cylindrical portion 23b. The base portion 23a is flat and perpendicular to the central axis direction of the liner 2. The cylindrical portion 23b rises from the base portion 23a and extends outward along the central axis O.

A boundary portion between the head portion 23 and the shoulder portion 22 is defined as a first boundary portion 24. The first boundary portion 24 is a portion that starts to curve from an end of the base portion 23a toward the shoulder portion 22 in a side cross-sectional view. A boundary portion between the shoulder portion 22 and the body portion 21 is defined as a second boundary portion 26. The second boundary portion 26 is a portion that starts to curve from the body portion 21 toward the shoulder portion 22 in a side cross-sectional view. That is, the first boundary portion 24 and the second boundary portion 26 are portions where the curvature greatly changes in the side cross-sectional shape of the liner 2.

As shown in FIG. 2 and FIG. 3, a projection 27 having a thickness larger than other portions is formed in the first boundary portion 24 over the entire circumferential direction. The projection 27 projects from the base portion 23a in a substantially mountain-like shape in a side cross-sectional view. The shape of the projection 27 is not particularly limited as long as it is formed thicker (as a thick portion) than other portions. In other words, when the groove 25 described later is provided, the thickness of the projection 27 is preferably set to such an extent that the strength of the liner 2 is not affected. The projection 27 may be formed intermittently in the circumferential direction.

As shown in FIG. 3, a groove 25 is formed at or near the top of the projection 27. The groove 25 is concave toward the body portion 21 and is parallel to the central axis O. Before performing the reinforcing layer forming step described later, the groove 25 opens outward. Here, the groove 25 is formed such that resin seeping out from the wound fiber reinforced resin enters the groove 25 by a filament winding method. That is, the width of the groove 25 is preferably set to such an extent that only the resin enters and the fibers do not enter. Furthermore, the depth of the groove 25 is preferably set to such an extent that an anchor effect is generated by the resin entering the groove 25 while considering the strength of the liner 2.

The fitting 3 is a metal member arranged in the head portion 23 formed in the liner 2. The fitting 3 includes a flange portion 3a and a cylindrical portion 3b. The flange portion 3a has a disc shape and is arranged in the base portion 23a of the head portion 23. The cylindrical portion 3b rises from the flange portion 3a and extends outward along the central axis O. The cylindrical portion 3b and the cylindrical portion 23b are arranged to communicate with each other and serve as a portion through which a fluid stored in the pressure vessel 1 flows in and out. The fitting 3 is arranged in the head portion 23 with substantially no gap.

As shown in FIG. 3, the outer peripheral surface (front surface) 3c of the flange portion 3a, the outer peripheral surface 22a of the shoulder portion 22, and the outer peripheral surface 27a of the projection 27 are arranged to be substantially flush with each other so that no step is generated. In addition, an inner peripheral surface 27b is formed in the projection 27 in the circumferential direction. Thus, a concave portion is formed by the inner peripheral surface 27b and the surface of the base portion 23a, so that the flange portion 3a of the fitting 3 can be arranged in the concave portion. The outer peripheral surface 27a of the projection 27 refers to an inclined surface of the projection 27 on the outer side with respect to the central axis O. The inner peripheral surface 27b of the projection 27 refers to an inclined surface of the projection 27 on the inner side with respect to the central axis O.

The reinforcing layer 4 is formed by winding a fiber reinforced resin, which includes a bundle of fibers impregnated with a resin, around the outer surfaces of the liner 2 and the fitting 3 by a filament winding method. The resin to be impregnated into the reinforcing fibers is not particularly limited as long as it exhibits a predetermined strength after curing. In the present embodiment, the resin is composed of, for example, a thermosetting resin such as an epoxy resin as a main agent. The resin to be impregnated into the reinforcing fibers is composed of, for example, an epoxy resin as a main agent, with a curing agent and a curing accelerator mixed at a predetermined ratio.

### <<Method for Manufacturing Pressure Vessel According to First Embodiment>>

Next, a method for manufacturing the pressure vessel will be described. In the method for manufacturing the pressure vessel according to the present embodiment, a liner forming step, a groove forming step, a reinforcing layer forming step, and a resin impregnating step are performed.

The liner forming step is a step of forming the liner 2 including the cylindrical body portion 21, the shoulder portion 22, and the head portion 23. The molding method of the liner 2 is not particularly limited. For example, the liner 2 is molded by blow molding or injection molding.

The groove forming step is a step of forming the groove 25 in the projection 27 formed in the first boundary portion 24. The method of forming the groove 25 is not particularly limited. The groove 25 may be formed by cutting after the liner 2 is formed, or the groove 25 may be formed together when the liner 2 is molded in the liner forming step.

The reinforcing layer forming step is a step of forming the reinforcing layer 4 by winding the fiber reinforced resin around the outer periphery of the liner 2 and the fitting 3 using a filament winding method. In the reinforcing layer forming step, the fiber reinforced resin is wound while allowing only the resin of the fiber reinforced resin to enter the groove 25. In the reinforcing layer forming step, low-angle helical winding, high-angle helical winding, and hoop winding are appropriately combined. The shoulder portion 22 is wound by high-angle helical winding or a combination of high-angle helical winding and low-angle helical winding.

The resin impregnating step is a step of causing the resin impregnated in the fiber reinforced resin to enter the groove 25. Since the fiber reinforced resin (bundle of fibers) is wound around the liner 2 while applying tension, the resin seeps out and enters the groove 25 during and after winding. The resin seeping out from the fiber reinforced resin enters the groove 25 and cures, whereby the reinforcing layer 4 is fixed to the liner 2.

In the present embodiment, the resin impregnating step has been described as a case where the resin is caused to seep out (intentionally) due to the winding of the fiber reinforced resin in the reinforcing layer forming step to enter the groove 25. However, the present invention is not limited to this. That is, a phenomenon in which the resin impregnated in the fiber reinforced resin naturally seeps out and enters the groove 25, regardless of the winding of the fiber reinforced resin in the reinforcing layer forming step, is also included in the resin impregnating step.

In a conventional vessel structure, since the shoulder portion 22 is curved, there is a problem that the position of the fiber reinforced resin wound around the liner in the reinforcing layer forming step is displaced. In particular, since the curvature greatly changes in the first boundary portion 24 and the second boundary portion 26 described later, displacement is likely to occur. When the position of the fiber reinforced resin is displaced, there is a problem that the reinforcing layer 4 peels off from the liner 2.

In this regard, according to the pressure vessel 1 and the method for manufacturing the pressure vessel 1 of the present embodiment, the groove 25 is provided in the first boundary portion 24 where the curvature greatly changes, and the resin enters the groove 25. Thus, since the resin seeping out from the reinforcing layer 4 enters the groove 25 and cures, an anchor effect is generated, and the reinforcing layer 4 can be fixed (adhered) to the liner 2. Therefore, displacement of the fiber reinforced resin can be prevented with a simple configuration.

Furthermore, the projection 27 having a thickness larger than other portions is provided in the first boundary portion 24, and the groove 25 is provided in the projection 27. Thus, even if the groove 25 is provided, a decrease in the strength of the liner 2 can be prevented. Moreover, the outer peripheral surface 22a of the shoulder portion 22, the outer peripheral surface 3c of the flange portion 3a, and the outer peripheral surface 27a of the projection 27 are substantially flush with each other. Thus, even if the projection 27 is provided, a step can be prevented from being generated on these outer peripheral surfaces, and stress concentration on the pressure vessel 1 can be avoided. The configuration of the groove is not limited to the above-described embodiment and can be changed as appropriate.

### <First Modification of Groove of First Embodiment>

As shown in FIG. 4, a groove 25A according to a first modification differs from the first embodiment in that the groove 25A includes two grooves provided near the top of the projection 27. A plurality of grooves may be provided as in the groove 25A according to the first modification. There may be three or more grooves. The width and depth of the two grooves may be the same or different.

### <Second Modification of Groove of First Embodiment>

As shown in FIG. 5, a groove 25B according to a second modification includes two grooves and opens to the top and the outer peripheral surface 27a of the projection 27. In this manner, the grooves may be formed at positions shifted from the top of the projection 27.

### <Third Modification of Groove of First Embodiment>

As shown in FIG. 6, a groove 25C according to a third modification differs from the first embodiment in that the groove 25C includes two parallel grooves, and the angle of the grooves is inclined with respect to the central axis O. As in the groove 25C according to the third modification, the angle of the groove does not have to be parallel to the central axis O. The angle of the groove can be set as appropriate within a range in which the resin of the fiber reinforced resin can enter.

### <Fourth Modification of Groove of First Embodiment>

As shown in FIG. 7, a groove 25D according to a fourth modification differs from the first embodiment in that the cross-sectional shape of the groove is a triangular shape. As in the groove 25D according to the fourth modification, the shape of the groove may be a triangular shape or other shapes.

### <Fifth and Sixth Modifications of Groove of First Embodiment>

As shown in FIG. 8, a groove 25E according to a fifth modification differs from the first embodiment in that the cross-sectional shape of the groove is a triangular shape and the angle of the groove is inclined with respect to the central axis O. The groove 25E opens to the outer peripheral surface 27a of the projection 27. As in the groove 25E according to the fifth modification, the shape of the groove may be a triangular shape or other shapes. Furthermore, as in a groove 25F according to a sixth modification shown in FIG. 9, the shapes of two grooves may be triangular in a cross-sectional view, and both may be formed to open to the outer peripheral surface 27a of the projection 27.

### <<Pressure Vessel According to Second Embodiment>>

Next, a pressure vessel and a method for manufacturing the pressure vessel according to a second embodiment will be described. As shown in FIG. 10, a pressure vessel 1A according to the second embodiment differs from the first embodiment in that a groove is formed in the second boundary portion 26.

A groove 29 is formed to be concave from the outer peripheral surface of the second boundary portion 26 toward the central axis O. Before performing the reinforcing layer forming step, the groove 29 opens toward the radially outer side. As in the second embodiment, the groove 29 may be provided in the second boundary portion 26. That is, since the groove 29 is formed in the second boundary portion 26 where displacement of the fiber reinforced resin is particularly likely to occur, the resin of the fiber reinforced resin enters the groove 29, and displacement of the fiber reinforced resin can be prevented. Grooves may be formed in both the first boundary portion 24 and the second boundary portion 26.

### <First Modification of Groove of Second Embodiment>

As shown in FIG. 11, a groove 29A according to a first modification differs from the second embodiment in that the groove 29A includes two grooves. A plurality of grooves may be provided as in the groove 29A according to the first modification. The width and depth of the two grooves may be the same or different.

### <Second and Third Modifications of Groove of Second Embodiment>

As shown in FIG. 12, a groove 29B according to a second modification differs from the second embodiment in that the cross-sectional shape of the groove is a triangular shape. As in the groove 29B according to the second modification, the shape of the groove may be a triangular shape or other shapes.

Furthermore, as shown in FIG. 13, a groove 29C according to a third modification includes two grooves each having a triangular shape in a cross-sectional view. In this manner, a plurality of triangular grooves may be formed.

Although the embodiments of the present invention have been described above, design changes can be made as appropriate without departing from the spirit of the present invention. For example, grooves having different shapes may be combined. Furthermore, the projection (thick portion) 27 may be omitted as long as the strength of the liner 2 can be ensured.

### Reference Signs List

- 1: Pressure vessel
- 2: Liner
- 3: Fitting
- 4: Reinforcing layer
- 21: Body portion
- 22: Shoulder portion
- 23: Head portion
- 24: First boundary portion
- 25: Groove
- 26: Second boundary portion
- 27: Projection (thick portion)
- 29: Groove

## Claims

1. A pressure vessel comprising:
a liner including a cylindrical body portion, a head portion in which a fitting is arranged, and a shoulder portion provided between the body portion and the head portion and reducing in diameter toward the head portion; and
a reinforcing layer formed by winding fibers impregnated with a resin around the outer peripheral surface of the liner, wherein
a groove is formed in at least one of a first boundary portion which is a boundary between the head portion and the shoulder portion and a second boundary portion which is a boundary between the body portion and the shoulder portion; and
the resin seeping out from the reinforcing layer enters the groove.

2. The pressure vessel according to claim 1, wherein:
a thick portion or a projection having a thickness larger than other portions is formed in the first boundary portion; and
the groove is formed in the thick portion or the projection.

3. A method for manufacturing a pressure vessel, comprising:
a liner forming step of forming a liner including a cylindrical body portion, a head portion in which a fitting is arranged, and a shoulder portion provided between the body portion and the head portion and reducing in diameter toward the head portion;
a groove forming step of forming a groove in at least one of a first boundary portion which is a boundary between the head portion and the shoulder portion and a second boundary portion which is a boundary between the body portion and the shoulder portion;
a reinforcing layer forming step of forming a reinforcing layer by winding fibers impregnated with a resin around the outer peripheral surface of the liner; and
a resin impregnating step of causing the impregnated resin to enter the groove.
